# EUROPÄISCHE PATENTSCHRIFT

(11) **EP 3 140 094 B1**
(45) Veröffentlichungstag und Bekanntmachung des Hinweises auf die Patenterteilung: **31.05.2023**
(21) Anmeldenummer: 15718201.5
(22) Anmeldetag: 21.04.2015
(51) Int. Cl.: B29C 31/08, B29B 11/16, B29C 70/54, B25J 15/00, B65H 3/22

(54) **TRANSPORTVORRICHTUNG UND TRANSPORTVERFAHREN ZUM TRANSPORTIEREN EINES HALBZEUGES SOWIE BEARBEITUNGSVORRICHTUNG ZUM BEARBEITEN EINES HALBZEUGES**
TRANSPORT DEVICE AND TRANSPORT METHOD FOR TRANSPORTING A SEMI-FINISHED PRODUCT AND PROCESSING DEVICE FOR PROCESSING A SEMI-FINISHED PRODUCT
DISPOSITIF DE TRANSPORT ET PROCÉDÉ DE TRANSPORT POUR TRANSPORTER UN PRODUIT SEMI-FINI AINSI QUE DISPOSITIF DE TRAITEMENT POUR TRAITER UN PRODUIT SEMI-FINI

(30) Priorität: 09.05.2014 DE 102014208705
(43) Veröffentlichungstag der Anmeldung: 15.03.2017
(73) Patentinhaber: Bayerische Motoren Werke Aktiengesellschaft, 80809 München (DE)
(72) Erfinder: HODDE, Jan, 80796 München (DE)
(86) Internationale Anmeldenummer: PCT/EP2015/058544
(87) Internationale Veröffentlichungsnummer: WO 2015/169578

(56) Entgegenhaltungen:
- EP-A2- 2 716 585
- DE-A1- 3 331 093
- DE-A1- 4 021 786
- DE-A1-102011 050 102
- DE-A1-102012 019 958
- US-A- 4 805 949
- US-A- 5 746 964

## Beschreibung

Die vorliegende Erfindung betrifft eine Transportvorrichtung zum Transportieren eines Faserhalbzeuges sowie eine Bearbeitungsvorrichtung zum Bearbeiten dieses Faserhalbzeuges. Ferner betrifft die vorliegende Erfindung eine Halbzeugherstellungsanlage zum Herstellen eines Faserhalbzeuges und ein Transportverfahren zum Aufnehmen, Transportieren und Ablegen eines Faserhalbzeuges.

Es ist grundlegend bekannt, dass für die Handhabung von Halbzeugen, wie insbesondere imprägnierten Halbzeugen und insbesondere imprägnierten Faserhalbzeugen, beispielsweise Greifer eingesetzt werden, welche das Halbzeug an deren Randbereich einklemmen und folglich als Klemmgreifer bezeichnet werden. Mit derartigen Greifern ist es jedoch nachteilig nicht möglich, die Position des Halbzeuges präzise und stabil zumindest während des Transportes des Halbzeuges von beispielsweise einer ersten Bearbeitungsvorrichtung zu einer zweiten Bearbeitungsvorrichtung zu halten. Insbesondere kann das Halbzeug während des Transportes verrutschen. Des Weiteren sind grundlegend sogenannte Nadelgreifer bekannt, welche eingesetzt werden, um das Halbzeug aufzunehmen und zu transportieren, wobei jedoch insbesondere aufgrund eines hohen Eigengewichtes des Halbzeuges dieses aus den Nadelgreifern herausrutschen kann. Nadelgreifer und deren Weiterbildungen sind beispielsweise aus der DE 10 2011 050102 A1, der US 4 805 949 A, der DE 33 31 093 A1, der DE 10 2012 019 958 A1 sowie der EP 2 716 585 A2 bekannt. Des Weiteren ist es mit den grundlegend bekannten Greifsystemen nicht möglich, insbesondere in einem Bereich eines Harzauftrages des Halbzeuges, in welchem das Imprägniermittel, wie beispielsweise Imprägnierharz auf das Halbzeug aufgetragen wird, das Halbzeug zu greifen.

Imprägnierte Faserhalbzeuge finden insbesondere im Flugzeugbau, in der Raumfahrt sowie auch im Fahrzeugbau Anwendung und werden bekannterweise als Prepregs bezeichnet. Prepregs sind vornehmlich ebene flächige Fasergebilde, welche in einem kontinuierlichen Prozess mit einem Matrixsystem im gewünschten Harz-Faserverhältnis imprägniert sind. Im Wesentlichen gibt es zwei bekannte textile Gebilde, wie beispielsweise das unidirektionale Prepreg, bei welchem in der Schicht alle Fasern parallel ausgerichtet sind, und zum anderen Gewebe-Prepregs mit einer Reihe unterschiedlichster Gewebearten. Die industrielle Herstellung von imprägnierten Faserverbundwerkstoffhalbzeugen erfolgt bekannterweise durch Handlaminieren im Nasspressverfahren, im Prepreg-Pressverfahren oder im Harzinfusionsverfahren, wie beispielsweise dem Resin Transfer Moulding (RTM) -Verfahren. Bei allen zuvor genannten Verfahren wird ein Halbzeug aus beispielsweise Kunstfasern in ein Imprägnierwerkzeug und insbesondere eine Imprägniervorrichtung eingelegt und mit einem Imprägniermittel, wie beispielsweise einem Imprägnierharz getränkt bzw. besprüht, wobei das Imprägniermittel durch die Hohlräume zwischen den Fasern eindringt und diese ummantelt. Nach dem Imprägnierprozess wird das mit dem Imprägniermittel getränkte Halbzeug in ein entsprechendes Formwerkzeug zum Verpressen des Halbzeuges eingelegt, welche auch als Konsolidierungsvorrichtung bezeichnet werden kann. Während dieses Pressvorganges wird insbesondere die Struktur des imprägnierten Faserhalbzeuges vernetzt und das Halbzeug geformt. Um einen Transport des zu bearbeitenden Halbzeuges und insbesondere des mit dem Imprägnierharz getränkten Halbzeuges zu der Konsolidierungsvorrichtung zu ermöglichen, ist es erforderlich das Halbzeug mittels einer Transportvorrichtung aufzunehmen und aus dem Imprägnierwerkzeug zum Konsolidierungswerkzeug zu transportieren und diesem zu übergeben. Hierfür ist ein präzises Aufnehmen und Ablegen erforderlich, welches jedoch mit den zuvor genannten Greifern nicht realisiert werden kann.

Es ist daher die Aufgabe der vorliegenden Erfindung, die voranstehend beschriebenen Nachteile bei einer Transportvorrichtung zum Transportieren eines Faserhalbzeuges sowie bei einer Bearbeitungsvorrichtung zum Bearbeiten eines Faserhalbzeuges und einer Halbzeugherstellungsanlage zum Herstellen eines Faserhalbzeuges zumindest teilweise zu beheben. Insbesondere ist es die Aufgabe der vorliegenden Erfindung, eine Transportvorrichtung zum Transportieren eines Faserhalbzeuges, eine Bearbeitungsvorrichtung zum Bearbeiten eines Faserhalbzeuges, eine Halbzeugherstellungsanlage zum Herstellen eines Faserhalbzeuges sowie ein Transportverfahren zum Transportieren des Faserhalbzeuges zur Verfügung zu stellen, mittels welchen auf einfache und kostengünstige Art und Weise ein präzises Aufnehmen des Faserhalbzeuges von einer Bearbeitungsvorrichtung, ein sicheres und verrutschfreies Transportieren des Faserhalbzeuges zu einer weiteren Bearbeitungsvorrichtung und ein präzises Ablegen des Faserhalbzeuges in der weiteren Bearbeitungsvorrichtung ermöglicht werden kann.

Die voranstehende Aufgabe wird gelöst durch eine Transportvorrichtung zum Transportieren eines Faserhalbzeuges mit den Merkmalen gemäß Anspruch 1 sowie durch eine Bearbeitungsvorrichtung zum Bearbeiten des Faserhalbzeuges mit den Merkmalen gemäß Anspruch 9. Ferner wird die voranstehende Aufgabe gelöst durch eine Halbzeugherstellungsanlage zur Herstellung eines Faserhalbzeuges mit den Merkmalen gemäß Anspruch 11 und ein Transportverfahren zum Aufnehmen, Transportieren und Ablegen eines Faserhalbzeuges mit den Merkmalen gemäß Anspruch 12. Weitere Merkmale und Details der Erfindung ergeben sich aus den Unteransprüchen, der Beschreibung und den Zeichnungen. Dabei gelten Merkmale und Details, die im Zusammenhang mit der Transportvorrichtung beschrieben sind, selbstverständlich auch im Zusammenhang mit der erfindungsgemäßen Bearbeitungsvorrichtung, der erfindungsgemäßen Halbzeugherstellungsanlage und/oder dem erfindungsgemäßen Transportverfahren und jeweils umgekehrt, so dass bezüglich der Offenbarung zu den einzelnen Erfindungsaspekten stets wechselseitig Bezug genommen wird bzw. werden kann. Außerdem kann bei dem erfindungsgemäßen Transportverfahren die erfindungsgemäße Transportvorrichtung und/oder die erfindungsgemäße Bearbeitungsvorrichtung Anwendung finden.

Die erfindungsgemäße Transportvorrichtung zum Transportieren eines Faserhalbzeuges, wobei die Transportvorrichtung ein Bestandteil einer Halbzeugherstellungsanlage ist, weist wenigstens ein Positioniermittel zum Positionieren des Faserhalbzeuges relativ zu der Transportvorrichtung, wobei das Positioniermittel als ein Positionierstift oder ein Positionierpin ausgebildet ist, und wenigstens ein Haltemittel zum Halten des Faserhalbzeuges während des Transportierens an der Transportvorrichtung auf. Erfindungsgemäß ist das Positioniermittel zumindest abschnittsweise in einen Eingriffsbereich des Faserhalbzeuges einbringbar, wobei der Eingriffsbereich als eine Ausnehmung, eine Aussparung, eine Vertiefung oder eine Bohrung ausgebildet ist, und das Haltemittel zumindest abschnittsweise an einer Oberfläche des Faserhalbzeuges anordenbar. Vorteilhaft ist das genannte Faserhalbzeug ein imprägniertes Faserhalbzeug, wobei es auch denkbar ist, dass das Faserhalbzeug ein tapegelegtes Bauteil aufweisend beispielsweise ein duroplastisches und/oder ein thermoplastisches Material. Das in einer Imprägniervorrichtung zu imprägnierende Faserhalbzeug ist beispielsweise ein textiles Halbzeug mit einem Gewebe, welches beispielsweise aus zwei rechtwinklig zueinander stehenden Faserrichtungen, auch Kette oder Schuss genannt, besteht. Beispielsweise weist das Faserhalbzeug als verwendete Gewebeart eine Leinenbindung, eine Körperbindung, eine Atlasbindung und/oder ein kettenstarkes Gewebe auf. Es ist jedoch auch möglich, dass anstelle des Gewebes unidirektionale Bänder verwendet werden. Als Faserhalbzeug kann im Rahmen der Erfindung auch ein noch nicht imprägniertes Bauteil, wie beispielsweise ein Prepreg verstanden werden, welches beispielsweise Endlosfasern und eine ungehärtete duroplastische Kunststoffmatrix aufweisen kann. Derartige Faserhalbzeuge und insbesondere derartig imprägnierte oder vorimprägnierte Faserhalbzeuge werden beispielsweise im Fahrzeugbau als Kofferraumdeckel, Motorhauben, Innenverkleidung und/oder Vergleichbarem verwendet. Als Matrix des imprägnierten Faserhalbzeuges dienen beispielsweise Epoxidharze oder auch Polyesterharze, während als Fasern beispielsweise Glasfasern in Form von Matten oder Gewebe sowie Aramid- und Kohlenstofffilamentgewebe eingesetzt werden können. Die zu transportierenden Faserhalbzeuge weisen beispielsweise eine konstante Dicke oder auch Vorsprünge, Ausnehmungen, Hinterschneidungen und/oder Vergleichbares auf. Demzufolge ist es möglich, dass die Faserhalbzeuge zumindest abschnittsweise Materialverstärkungen aufweisen, wodurch Dickenunterschiede im Faserhalbzeug erzeugt werden. Die erfindungsgemäße Transportvorrichtung dient vorteilhaft folglich dazu das Faserhalbzeug präzise aufzunehmen, beschädigungsfrei zu transportieren und auch wieder präzise in einer entsprechenden Bearbeitungsvorrichtung abzulegen.

Für das präzise Aufnehmen und Ablegen des Faserhalbzeuges von oder in einer Bearbeitungsvorrichtung ist vorteilhaft das Positioniermittel zuständig, welches zum Positionieren des Faserhalbzeuges relativ zu der Transportvorrichtung selbst sowie demzufolge auch relativ zu der Bearbeitungsvorrichtung dient. Das Positioniermittel in Form des Positionierstiftes bzw. des Positionierpins, kann sich vorteilhaft in Form eines Zylinders vorteilhaft in einer vertikalen Richtung erstrecken, und zumindest abschnittsweise in Eingriffsbereiche bzw. in einen Eingriffsbereich des Faserhalbzeuges eingreifen. Im Rahmen der Erfindung ist es jedoch auch denkbar, dass das Positioniermittel jedwede andere geometrische Ausgestaltung aufweisen kann und folglich auch in Form eines im Querschnitt quaderförmigen, rechtwinkligen oder auch ovalen Stabes ausgestaltet ist. Es ist des Weiteren denkbar, dass das Positioniermittel sich im Wesentlichen zumindest abschnittsweise in einer horizontalen Richtung bzw. Ebene erstreckt und folglich nicht in Bereichen der oberen Oberfläche des Faserhalbzeuges, sondern an den seitlichen Oberflächen bzw. Wandungen des Faserhalbzeuges eingreift bzw. eingebracht wird. Die horizontale Ebene streckt sich im Rahmen der Erfindung dabei im Wesentlichen entlang einer Auflagefläche der Bearbeitungsvorrichtung(en), auf welche das Faserhalbzeug aufgelegt bzw. angeordnet wird, so dass sich folglich die vertikale Richtung bzw. Ebene im Rahmen der Erfindung im Wesentlichen senkrecht zu dieser Auflagefläche erstreckt. Der Eingriffsbereich des Faserhalbzeuges ist insbesondere eine Durchgangsbohrung. Der wenigstens eine Eingriffsbereich, wobei das Faserhalbzeug auch mehr als einen Eingriffsbereich und vorteilhaft zwei oder mehr Eingriffsbereiche aufweisen kann, kann beispielsweise in einem Abschnitt des Faserhalbzeuges direkt eingebracht sein, oder auch in Abschnitten eines zusätzlichen Materials, welches an das Faserhalbzeug lösbar oder unlösbar angeheftet ist. Vorteilhaft weist die Transportvorrichtung selbst mehr als ein Positioniermittel und vorteilhaft zwei oder mehr Positioniermittel auf, welche beispielsweise in einem gleichen Abstand zueinander beabstandet angeordnet sind, so dass ein prozesssicheres und einfaches Positionieren des Faserhalbzeuges gewährleistet wird.

Zusätzlich zu dem Positioniermittel weist die erfindungsgemäße Transportvorrichtung auch ein Haltemittel zum Halten des Faserhalbzeuges auf, wobei das Haltemittel beispielsweise in Form eines Greifelementes und insbesondere eines Greifarmes, eines Hubmastes, eines Haltestiftes bzw. Haltepins, eines Widerhakens oder auch eines Schwenkarmes oder Ähnlichem ausgestaltet sein kann. Vorteilhaft ist das Haltemittel in einem Bereich des Faserhalbzeuges anordenbar, in welchem das Faserhalbzeug untergriffen werden kann, um ein Anheben des Faserhalbzeuges zum Aufnehmen und Transportieren ermöglichen zu können. Hierbei ordnet sich das Haltemittel beispielsweise in einem Bereich einer Oberfläche des Faserhalbzeuges an, wobei die Oberfläche beispielsweise ein Bestandteil einer Auflageoberfläche ist, mittels welcher das Faserhalbzeug zumindest abschnittsweise in Kontakt mit einer Anordnungsoberfläche eines Bearbeitungswerkzeuges bzw. einer Bearbeitungsvorrichtung tritt. Vorteilhaft liegen diese Oberfläche und insbesondere die Auflageoberfläche gegenüber einer Auftragungsoberfläche bzw. Aufbringungsoberfläche des Faserhalbzeuges, auf welche insbesondere innerhalb einer Imprägniervorrichtung das Imprägniermittel, wie insbesondere das Imprägnierharz zum Imprägnieren des Faserhalbzeuges aufgebracht wird. Folglich ist die Auflageoberfläche insbesondere eine untere Oberfläche des Faserhalbzeuges.

Im Rahmen der Erfindung ist es des Weiteren denkbar, dass das Haltemittel beweglich relativ zu dem Positioniermittel ausgebildet ist. Vorteilhaft ist das Haltemittel in drei Freiheitsgraden beweglich ausgestaltet und kann sich vorteilhaft in x-, y- und z-Richtung translatorisch bewegen sowie auch eine Drehbewegung um die x-, y- oder z-Achse ausführen. Die Bewegung des Haltemittels selbst wird lediglich durch dessen Anordnung im Bereich der Transportvorrichtung begrenzt.

So ist es denkbar, dass das Haltemittel zumindest abschnittsweise in einer Aussparung des Positioniermittels anordenbar ist. Das bedeutet, dass das Positioniermittel selbst eine Ausnehmung bzw. eine Aussparung aufweist, innerhalb welcher das Haltemittel derart eingebracht wird, dass ein Durchdringen des Positioniermittels durch den Eingriffsbereich des Faserhalbzeuges ermöglicht werden kann, ohne dass das Haltemittel nachteilig mit dem Faserhalbzeug interagiert. Folglich ist das Haltemittel platz- bzw. raumsparend in der Aussparung des Positioniermittels anordenbar, zumindest sofern ein Halten und Transportieren des Faserhalbzeuges mittels des Haltemittels noch nicht erforderlich ist. Dies bedeutet, dass das Positioniermittel mit folglich einem innerhalb der Aussparung angeordneten Haltemittel in die Eingriffsbereiche bzw. in den Eingriffsbereich des Faserhalbzeuges eingebracht werden kann und bei Bedarf des Anhebens bzw. des Transportes des Faserhalbzeuges derart aus der Aussparung des Positioniermittels herausgeschoben bzw. herausgedreht bzw. herausbewegt bzw. herausgeklappt werden kann, dass das Haltemittel zumindest einen Abschnitt in einem Bereich einer Oberfläche des Faserhalbzeuges kontaktiert, wobei hierbei das Faserhalbzeug derart mit dem Haltemittel untergriffen wird, dass ein Anheben des Faserhalbzeuges mittels der Transportvorrichtung gewährleistet werden kann.

So ist es des Weiteren denkbar, dass das Haltemittel an einer unteren Oberfläche des Positioniermittels anordenbar ist bzw. zum Ermöglichen des Anhebens und Transportes des Faserhalbzeuges angeordnet ist. Die untere Oberfläche des Positioniermittels ist dabei insbesondere die Oberfläche, welche durch den Eingriffsbereich des Faserhalbzeuges hindurchdringt, um ein Herausfahren bzw. Aufklappen des Haltemittels aus einem Bereich des Positioniermittels an einer Oberfläche des Faserhalbzeuges zum Aufnehmen und zum Anheben des Faserhalbzeuges gewährleisten zu können. Die untere Oberfläche des Positioniermittels ist folglich der oberen Oberfläche des Positioniermittels gegenüberliegend angeordnet, wobei die obere Oberfläche des Positioniermittels beispielsweise an einem Tragarm angeordnet ist, welcher sich beispielsweise im Wesentlichen in horizontaler Richtung erstreckt, während sich ausgehend von diesem Tragarm das Positioniermittel vorteilhaft im Wesentlichen in vertikaler Richtung weg erstreckt.

Vorteilhaft ist das Haltemittel an dem Positioniermittel zumindest abschnittsweise drehbar um einen Drehpunkt angeordnet bzw. gelagert. Folglich ist es denkbar, dass das Haltemittel aus dem Positioniermittel bzw. ausgehend von dem Positioniermittel ausgeklappt bzw. herausgeklappt bzw. herausgeschwenkt werden kann, wobei das Haltemittel folglich in Form eines Schwenkarmes agiert, welcher um den Drehpunkt geschwenkt bzw. gedreht wird. Der Drehpunkt bzw. die Drehachse erstreckt sich dabei im Wesentlichen parallel zu einer Längsachse des Positioniermittels, wobei sich die Längsachse des Positioniermittels vorteilhaft in vertikaler Richtung erstreckt. Es ist jedoch auch denkbar, dass das Haltemittel translatorisch ausgehend von dem Positioniermittel und insbesondere einer zentrischen Achse des Positioniermittels verschiebbar ist, und folglich aus beispielsweise der oben genannten Aussparung des Positioniermittels herausgeschoben wird bzw. aus dem Bodenbereich des Positioniermittels hervortretend herausgeschoben werden kann. Es ist des Weiteren denkbar, dass das Haltemittel aus dem Positioniermittel heraus geklappt wird und folglich in Form eines Widerhakens ausgebildet ist. Mittels den oben genannten Haltemitteln wird folglich eine Auflagefläche der Transportvorrichtung geschaffen, mittels welcher das Faserhalbzeug zumindest abschnittsweise untergriffen und folglich angehoben und transportiert werden kann.

Es ist des Weiteren denkbar, dass die Transportvorrichtung ein relativ zu dem Faserhalbzeug beweglich ausgestaltetes Trägerelement aufweist, an welchem das Positioniermittel und/oder das Haltemittel angeordnet sind. Das Trägerelement bzw. der Tragarm dient folglich zum Anordnen bzw. Halten des Positioniermittels und/oder des Haltemittels, wobei das Trägerelement sich vorteilhaft in horizontaler Richtung erstreckt. Das Trägerelement selbst wird beispielsweise über entsprechende Führungsschienen entlang einer Führungsbahn bewegt, so dass das mit dem Positioniermittel positionierte und mit dem Haltemittel gehaltene Faserhalbzeug entlang der Führungsbahn, beispielsweise von einer ersten Bearbeitungsvorrichtung zu einer zweiten Bearbeitungsvorrichtung transportiert werden kann. Des Weiteren ist es denkbar, dass das Trägerelement in vertikaler Richtung herauf bzw. herab und folglich von einer Bearbeitungsvorrichtung weg und zu einer Bearbeitungsvorrichtung hin bewegt werden kann. Durch das beispielsweise Absenken des Trägerelementes in Richtung der Bearbeitungsvorrichtung, ist es möglich, dass die Positioniermittel zumindest abschnittsweise in beispielsweise die Eingriffsbereiche des Faserhalbzeuges eindringen, um eine Positionierung des Faserhalbzeuges wenigstens relativ zu der Transportvorrichtung zu ermöglichen. Bei einem Herausfahren bzw. Herausdrehen und folglich dem Anordnen der Haltemittel an der entsprechenden Oberfläche des Faserhalbzeuges und einem vertikal nach oben gerichteten Bewegen des Trägerelementes wird folglich die Transportvorrichtung und das mit der Transportvorrichtung verbundene Faserhalbzeug bzw. das durch die Transportvorrichtung getragene Faserhalbzeug in vertikaler Richtung nach oben bewegt, um ein Aufnehmen bzw. Abheben des Faserhalbzeuges und ein Entfernen aus der Bearbeitungsvorrichtung des Faserhalbzeuges zu ermöglichen.

Es ist des Weiteren denkbar, dass das Halteelement beweglich relativ zum Trägerelement ausgestaltet ist. Das Trägerelement, welches beispielsweise ein Tragarm oder eine Trägerplatte oder eine Trägerplattform sein kann und selbst vorteilhaft in vertikaler und horizontaler Richtung beweglich ausgestaltet ist, dient folglich vorteilhaft zum Halten und Ausrichten des Haltemittels selbst. Das Haltemittel ist demzufolge in translatorischer Richtung und folglich in vertikaler Richtung sowie in horizontaler Richtung und vorteilhaft auch in rotatorischer Richtung bzw. Drehrichtung bei einem Schwenken um einen definierten Drehpunkt beweglich relativ zum Trägerelement angeordnet.

Es ist des Weiteren denkbar, dass das Positioniermittel eine Ausnehmung zum zumindest abschnittsweisen Aufnehmen eines Anordnungselementes einer Bearbeitungsvorrichtung aufweist. Die Bearbeitungsvorrichtung ist beispielsweise eine Imprägniervorrichtung zum Aufbringen eines Imprägniermittels, wie eines Imprägnierharzes auf zumindest einer Aufbringungsoberfläche des Faserhalbzeuges oder eine Konsolidierungsvorrichtung zum Formen des Werkzeuges und Vernetzen der Halbzeugfasern. Die Ausnehmung des Positioniermittels ist vorteilhaft derart ausgestaltet, dass eine obere Oberfläche und insbesondere eine Eindringungsoberfläche bzw. ein Eindringungsabschnitt des Anordnungselementes der Bearbeitungsvorrichtung in die Ausnehmung eingebracht werden kann. Demzufolge ist es denkbar, dass die Ausnehmung und zumindest ein oberer Bereich des Anordnungselementes eine vergleichbare Gestalt aufweisen und beispielsweise in Form eines zylindrischen Kegels ausgestaltet sind. Das Positioniermittel wird beim Vorgang des Aufnehmens des Faserhalbzeuges sowie auch beim Vorgang des Ablegens des Faserhalbzeuges von einer Bearbeitungsvorrichtung bzw. in einer Bearbeitungsvorrichtung derart auf das Anordnungselement der Bearbeitungsvorrichtung aufgesetzt, dass zumindest ein Abschnitt des Anordnungselementes in die Ausnehmung des Positioniermittels einbringbar ist, so dass vorteilhaft das Positioniermittel sowie auch das Anordnungselement zentrisch zueinander angeordnet sind. Dadurch wird eine definierte Anordnung bzw. Positionierung des Faserhalbzeuges relativ zu der Transportvorrichtung und folglich auch relativ zu der zu transportierenden Bearbeitungsvorrichtung ermöglicht. Das Anordnungselement selbst dient vorteilhaft dazu das Faserhalbzeug innerhalb der Bearbeitungsvorrichtung zu Positionieren und zumindest zeitweise während der Bearbeitung zu halten.

Des Weiteren ist eine Bearbeitungsvorrichtung zum Bearbeiten eines Faserhalbzeuges beansprucht, wobei die Bearbeitungsvorrichtung ein Bestandteil einer Halbzeugherstellungsanlage ist und wenigstens ein Anordnungselement, wobei das Anordnungselement als ein Anordnungsstift oder ein Anordnungspin ausgebildet ist, zum Anordnen des Faserhalbzeuges relativ zu der Bearbeitungsvorrichtung aufweist. Erfindungsgemäß ist das Anordnungselement in einen Eingriffsbereich des Faserhalbzeuges einbringbar, wobei der Eingriffsbereich als eine Ausnehmung, eine Aussparung, eine Vertiefung oder eine Bohrung ausgebildet ist. Das Anordnungselement, welches beispielsweise in Form eines Anordnungsstiftes oder Anordnungspins ausgestaltet ist, erstreckt sich folglich von einer Aufnahmeplatte bzw. einer Anordnungsoberfläche des Bearbeitungswerkzeuges vorteilhaft in vertikaler Richtung nach oben, so dass ein Aufstecken des zu bearbeitenden Faserhalbzeuges auf das Anordnungselement ermöglicht wird. Vorteilhaft weist die Bearbeitungsvorrichtung, welche beispielsweise eine Imprägniervorrichtung zum Aufbringen des Imprägniermittels, wie insbesondere des Imprägnierharzes ist oder auch eine Konsolidierungsvorrichtung zum Vernetzen der Fasern bzw. zum Formen des Faserhalbzeuges ist, mehr als ein Anordnungselement und insbesondere zwei oder mehr Anordnungselemente auf. Vorteilhaft ist die Mehrzahl an Anordnungselementen voneinander beabstandet, so dass ein definiertes Anordnen und Ausrichten des Faserhalbzeuges in der Bearbeitungsvorrichtung ermöglicht werden kann. Vorteilhaft sind die Anordnungselemente der Bearbeitungsvorrichtung auch derart angeordnet, dass in Berücksichtigung des Poka-Yoke-Prinzipes ein falsches Anordnen des Faserhalbzeuges hinsichtlich dessen Ausrichtung innerhalb der Bearbeitungsvorrichtung vermieden wird. Das Anordnungselement weist vorteilhaft zumindest abschnittsweise eine zylinderförmige Gestalt auf, wobei das Anordnungselement vorteilhaft im oberen Endbereich (distales Ende des Anordnungselementes), welcher mit dem Eingriffsbereich des Faserhalbzeuges zumindest abschnittsweise in Kontakt tritt, eine im Wesentlichen kegelstumpfförmige Form aufweist, welche folglich Einführschrägen umfasst, um ein leichtes Aufsetzen des Faserhalbzeuges auf das Anordnungselement der Bearbeitungsvorrichtung zu ermöglichen. Vorteilhaft durchdringt das Anordnungselement die Dicke des Faserhalbzeuges auch vollständig, sofern beispielsweise das Faserhalbzeug eine Durchgangsbohrung als Eingriffsbereich besitzt.

Es ist des Weiteren denkbar, dass das Anordnungselement mittels eines Federelementes beweglich relativ zu der Bearbeitungsvorrichtung angeordnet ist. Das Federelement ist beispielsweise eine Druckfeder, welche mit einem Bereich des Anordnungselementes und insbesondere einem unteren distalen Ende des Anordnungselementes verbunden ist, welcher dem Bereich des Anordnungselementes gegenüberliegt, der zumindest abschnittsweise den Eingriffsbereich des Faserhalbzeuges kontaktiert, nämlich dem oberen distalen Ende des Anordnungselementes. Das Federelement wird insbesondere beim Aufsetzen der Positioniermittel auf das Anordnungselement komprimiert bzw. gestaucht, so dass das Federelement derart zusammengedrückt wird, dass das Anordnungselement vorteilhaft aus dem Eingriffsbereich des Faserhalbzeuges mittels insbesondere des Positioniermittels der Transportvorrichtung herausgedrückt bzw. herausbewegt und folglich verdrängt wird. Demzufolge wird das Faserhalbzeug vorteilhaft in einfacher und prozesssicherer Weise von der Bearbeitungsvorrichtung an die Transportvorrichtung hinsichtlich dessen Positionierung übergeben. Es ist jedoch auch denkbar, dass das Anordnungselement starr und unbeweglich an einer Bearbeitungsplattform der Bearbeitungsvorrichtung angeordnet ist und sich folglich nicht durch das Positioniermittel beim Aufnehmen und/oder Ablegen des Faserhalbzeuges von bzw. in einer Bearbeitungsvorrichtung verdrängen lässt. Hierbei ist es zudem denkbar, dass ein starres und insbesondere unbeweglich angeordnetes Anordnungselement lediglich eine derart geringe Länge bzw. Größe aufweist, dass das Anordnungselement lediglich bis in einen Teilabschnitt des Eingriffsbereiches des Faserhalbzeuges eingreifen kann und folglich die Dicke bzw. die Länge des Eingriffsbereiches nicht vollständig durchdringt.

Bei der beschriebenen Bearbeitungsvorrichtung ergeben sich sämtliche Vorteile, die bereits zu einer Transportvorrichtung zum Transportieren des Faserhalbzeuges gemäß dem ersten Aspekt der Erfindung beschrieben wurden sind.

Des Weiteren ist eine Halbzeugherstellungsanlage zur Herstellung eines Faserhalbzeuges und insbesondere eines imprägnierten Faserhalbzeuges beansprucht, welche eine Transportvorrichtung gemäß wenigstens einem der vorangegangenen Ansprüche 1 bis 8 und folglich gemäß der vorangegangenen Art und/oder eine Bearbeitungsvorrichtung gemäß wenigstens einem der vorangegangenen Ansprüche 9 oder 10 und folglich eine Bearbeitungsvorrichtung gemäß der vorangegangen Art aufweist. Vorteilhaft weist die Halbzeugherstellungsanlage wenigstens eine Imprägniervorrichtung und vorteilhaft zusätzlich wenigstens auch eine Konsolidierungsvorrichtung auf. Die Transportvorrichtung der Halbzeugherstellungsanlage dient insbesondere zum Aufnehmen, Transportieren und Ablegen des Faserhalbzeuges zwischen der wenigstens einen Imprägniervorrichtung zu der wenigstens einen Konsolidierungsvorrichtung der Halbzeugherstellungsanlage. Es ist des Weiteren denkbar, dass die Halbzeugherstellungsanlage auch eine Flechtanlage zum Umwickeln beispielsweise eines Stützkerns mit Flechtmatten bzw. Fasern zur Herstellung eines Faserhohlbauteils, welches in der Imprägniervorrichtung mittels des Imprägniermittels durchtränkt wird, aufweist.

Bei der beschriebenen erfindungsgemäßen Halbzeugherstellungsanlage ergeben sich sämtliche Vorteile, die bereits zu einer Transportvorrichtung zum Transportieren des Faserhalbzeuges und/oder zu einer Bearbeitungsvorrichtung zum Bearbeiten des Faserhalbzeuges gemäß den vorangegangen Aspekten der Erfindung beschrieben worden sind.

Es ist des Weiteren ein Transportverfahren zum Aufnehmen, Transportieren und Ablegen eines Faserhalbzeuges von und zu einer Bearbeitungsvorrichtung mittels einer Transportvorrichtung beansprucht, wobei zum Aufnehmen des Faserhalbzeuges zumindest ein Positioniermittel der Transportvorrichtung zum Positionieren des Faserhalbzeuges relativ zu der Transportvorrichtung in einen Eingriffsbereich des Faserhalbzeuges eingebracht wird und zumindest ein Haltemittel der Transportvorrichtung zum Halten des Faserhalbzeuges an der Transportvorrichtung zumindest abschnittsweise an einer Oberfläche des Faserhalbzeuges angeordnet wird. Demzufolge wird beispielsweise zum Aufnehmen des Faserhalbzeuges die Transportvorrichtung derart in den Bereich der ersten Bearbeitungsvorrichtung bewegt und insbesondere gefahren, dass das wenigstens eine Positioniermittel der Transportvorrichtung derart in den Eingriffsbereich des Faserhalbzeuges eingreift, dass eine Positionierung des Faserhalbzeuges relativ zu der Transportvorrichtung ermöglicht werden kann. Nach dem Eingreifen bzw. Einbringen des Positioniermittels in den Eingriffsbereich des Faserhalbzeuges, wird ein Haltemittel der Transportvorrichtung derart herausgefahren bzw. herausgedreht bzw. in Richtung des zu transportierenden Faserhalbzeuges bewegt, dass dieses an eine Oberfläche und insbesondere an eine Aufnahme- bzw. Auflageoberfläche und insbesondere in einem Bereich dieser Auflageoberfläche des Faserhalbzeuges angeordnet werden kann, um ein Anheben des Faserhalbzeuges von der Bearbeitungsvorrichtung und einen sicheren und verrutschfreien Transport zu beispielsweise einer weiteren Bearbeitungsvorrichtung zu ermöglichen. So ist es beispielsweise denkbar, dass das Haltemittel in die Schlitze eines beispielsweise geschlitzten Imprägnierwerkzeuges eingefahren wird, um ein Anordnen an der unteren Oberfläche des Faserhalbzeuges zu ermöglichen, insbesondere, da in diesen Bereichen das zu transportierende Faserhalbzeug nicht auf einer Oberfläche der Bearbeitungsvorrichtung aufliegt. Die Imprägniervorrichtung selbst ist vorteilhaft geschlitzt bzw. weist vorteilhaft Durchlässe im Bodenbereich der Auflageplatte auf, um einen Abtransport von überflüssigem Imprägniermittel, welches durch das zu imprägnierende Faserhalbzeug nicht aufgenommen werden kann, zu gewährleisten.

Durch ein Positionieren des Faserhalbzeuges mittels des Positioniermittels sowie ein Untergreifen des Faserhalbzeuges mittels des Haltemittels ist ein einfaches, sicheres und präzises Transportieren und insbesondere Aufnehmen sowie Ablegen eines Faserhalbzeuges jedweder Gestaltung und Formgebung möglich, wobei insbesondere auch ein Durchhängen des Faserhalbzeuges bzw. eine Deformierung des Faserhalbzeuges während des Transportes vermieden wird. Hierdurch wird vorteilhaft auch die Menge an Ausschussteilen reduziert und demzufolge die Produktionskosten minim iert.

Folglich ist es denkbar, dass eine Transportvorrichtung gemäß wenigstens einem der vorangegangenen Ansprüche 1 bis 8 und folglich der vorangegangenen Art zum Aufnehmen, Transportieren und Ablegen eines Faserhalbzeuges und/oder eine Bearbeitungsvorrichtung zum Bearbeiten eines Faserhalbzeuges gemäß wenigstens einem der vorangegangenen Ansprüche 9 oder 10 und demzufolge der vorangegangenen Art verwendet wird bzw. werden. Vorteilhaft ist es demnach möglich, dass beim Aufnahmeprozess des Faserhalbzeuges das Positioniermittel derart in den Eingriffsbereich des Faserhalbzeuges eindringt, dass die in dem Eingriffsbereich des Faserhalbzeuges bereits angeordneten Anordnungselemente des Bearbeitungswerkzeuges mittels des Positioniermittels entgegen einer Federkraft eines Federelementes zum Ausrichten des Anordnungselementes bewegt werden können, so dass die Anordnungselemente aus dem Eingriffsbereich des Faserhalbzeuges mittels des Positioniermittels herausgeschoben und insbesondere herausbewegt werden. Dadurch wird eine Übergabe des Faserhalbzeuges von dem Anordnungselement zu dem Positioniermittel ermöglicht. Vorteilhaft weisen das Positioniermittel und auch das Anordnungselement eine zueinander vergleichbare Form und insbesondere eine kreiszylindrische Form auf. Das Positioniermittel der Transportvorrichtung weist vorteilhaft zudem eine Ausnehmung auf, welche derart ausgestaltet ist, dass ein oberer distaler Bereich und insbesondere ein Kopfbereich des Anordnungselementes der Bearbeitungsvorrichtung in diese Ausnehmung des Positioniermittels zumindest abschnittsweise einbringbar ist, so dass insbesondere ein Verrutschen des Positioniermittels auf dem Anordnungselement vermieden wird. Es ist jedoch auch denkbar, dass das Anordnungselement der Bearbeitungsvorrichtung derart dimensioniert ist, dass dieses sich nicht vollständig durch den Eingriffsbereich des Faserhalbzeuges erstreckt, so dass folglich ein Herausschieben bzw. ein Herausbewegen des Anordnungselementes mittels des Positioniermittels der Transportvorrichtung nicht erforderlich ist, um ein hinreichendes Einbringen des Positioniermittels in den Eingriffsbereich des Faserhalbzeuges zu ermöglichen. In diesem Falle weist die Bearbeitungsvorrichtung kein Federelement zum beweglichen Anordnen des Anordnungselementes auf. Es ist des Weiteren möglich, dass das Positioniermittel und das Haltemittel derart zueinander angeordnet sind, dass das Haltemittel beim Einbringen des Positioniermittels in den Eingriffsbereich des Faserhalbzeuges folglich ebenfalls durch den Eingriffsbereich des Faserhalbzeuges transportiert wird und in einem Ausgangsbereich des Eingriffsbereiches angeordnet wird. Demzufolge weist das Faserhalbzeug insbesondere eine Durchgangsbohrung als Eingriffsbereich auf, durch welche das Positioniermittel vollständig hindurchgreift, so dass das Haltemittel, welches beispielsweise in einem Endbereich des Positioniermittels oder auch in einer Ausnehmung des Positioniermittels angeordnet ist, um eine Bewegung des Positioniermittels durch den Eingriffsbereich nicht zu behindern, aus dieser Ausgangsposition in eine Halteposition herausbewegt und insbesondere herausgeschwenkt werden kann, um eine Anordnung in einem Bereich einer Oberfläche des Faserhalbzeuges zu ermöglichen, aufgrund welcher eine Aufnahme und insbesondere ein Transportieren des Faserhalbzeuges realisiert werden kann.

Bei dem beschriebenen Transportverfahren ergeben sich sämtliche Vorteile, die bereits zu einer Transportvorrichtung, einer Bearbeitungsvorrichtung und/oder einer Halbzeugherstellungsanlage gemäß den vorausgegangenen Aspekten der Erfindung beschrieben worden sind.

Ausführungsformen einer erfindungsgemäßen Halbzeugherstellungsanlage sowie einer erfindungsgemäßen Transportvorrichtung und einer erfindungsgemäßen Bearbeitungsvorrichtung werden nachfolgend anhand von Zeichnungen näher erläutert. Es zeigen jeweils schematisch:
- Figur 1a: in einer Seitenansicht einen aus dem Stand der Technik bekannten Klemmgreifer in geöffneter Position,
- Figur 1b: in einer Seitenansicht die in der Figur 1a gezeigte Ausführungsform eines aus dem Stand der Technik bekannten Klemmgreifers in geschlossenem Position,
- Figur 2a: in einer Seitenansicht eine erste Ausführungsform einer erfindungsgemäßen Halbzeugherstellungsanlage mit einer Ausführungsform einer Transportvorrichtung und einer Ausführungsform einer Bearbeitungsvorrichtung beim Vorgang des Heranbewegens der Transportvorrichtung an die Bearbeitungsvorrichtung,
- Figur 2b: in einer Seitenansicht die in der Figur 2a gezeigte Ausführungsform einer erfindungsgemäßen Halbzeugherstellungsanlage, bei einem Aufnahmevorgang des Faserhalbzeuges von der Bearbeitungsvorrichtung durch die Transportvorrichtung,
- Figur 2c: in einer Seitenansicht die in den Figuren 2a und 2b gezeigte Ausführungsform der erfindungsgemäßen Halbzeugherstellungsanlage während eines Vorganges des Abhebens des Faserhalbzeuges von der Bearbeitungsvorrichtung und Transportierens mittels der Transportvorrichtung,
- Figur 3a: in einer Seitenansicht eine weitere Ausführungsform einer erfindungsgemäßen Halbzeugherstellungsanlage mit der in den Figuren 2a bis 2c gezeigten Ausführungsform einer Transportvorrichtung und einer weiteren Ausführungsform einer Bearbeitungsvorrichtung während des Vorgangs des Transportierens des Faserhalbzeuges zu der Bearbeitungsvorrichtung,
- Figur 3c: in einer Seitenansicht die in der Figur 3a gezeigte Ausführungsform einer erfindungsgemäßen Halbzeugherstellungsanlage während des Vorganges des Übergebens des Faserhalbzeuges von der Transportvorrichtung an die Bearbeitungsvorrichtung,

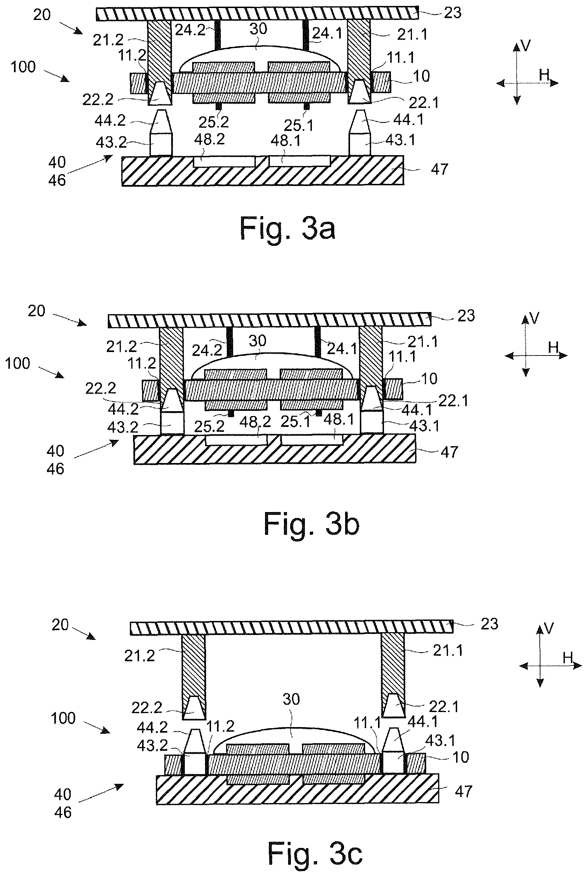

- Figur 3c: in einer Seitenansicht die in den Figuren 3a und 3b gezeigte Ausführungsform einer erfindungsgemäßen Halbzeugherstellungsanlage bei einem Ablegevorgang des Faserhalbzeuges in der Bearbeitungsvorrichtung,

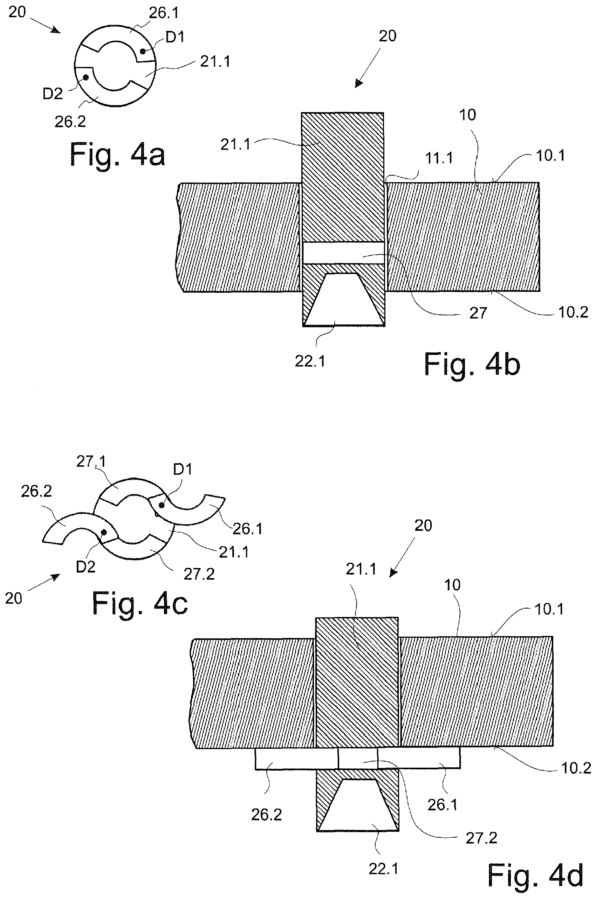

- Figur 4a: in einer Draufsicht eine Schnittdarstellung einer Ausführungsform eines Positioniermittels einer erfindungsgemäßen Transportvorrichtung,
- Figur 4b: in einer Seitenansicht eine Schnittdarstellung der in Figur 4a gezeigten Ausführungsform des Positioniermittels der erfindungsgemäßen Transportvorrichtung,
- Figur 4c: in einer Draufsicht eine Schnittdarstellung der in den Figuren 4a und 4b gezeigten Ausführungsform eines Positioniermittels mit ausgeschwenktem Haltemittel,
- Figur 4d: in einer Seitenansicht eine Schnittdarstellung der in den Figuren 4a bis 4c gezeigten Ausführungsform eines Positioniermittels mit ausgefahrenem bzw. ausgeschwenktem Haltemittel, und

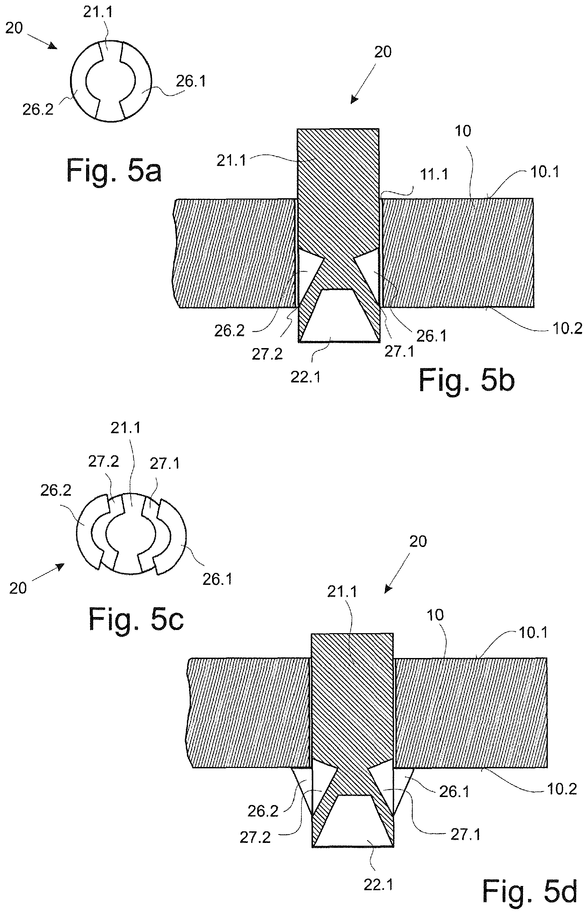

- Figur 5a: in einer Draufsicht eine Schnittdarstellung einer weiteren Ausführungsform eines Positioniermittels einer erfindungsgemäßen Transportvorrichtung,
- Figur 5b: in einer Seitenansicht eine Schnittdarstellung der in Figur 5a gezeigten weiteren Ausführungsform des Positioniermittels der erfindungsgemäßen Transportvorrichtung,
- Figur 5c: in einer Draufsicht eine Schnittdarstellung der in den Figuren 5a und 5b gezeigten weiteren Ausführungsform eines Positioniermittels mit ausgefahrenem Haltemittel, und
- Figur 5d: in einer Seitenansicht eine Schnittdarstellung der in den Figuren 5a bis 5c gezeigten weiteren Ausführungsform eines Positioniermittels mit ausgefahrenem Haltemittel.

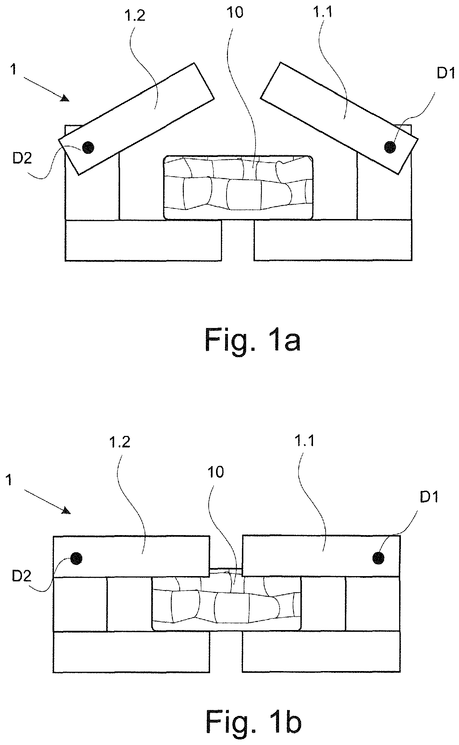

Elemente mit gleicher Funktion und Wirkungsweise sind in den Figuren 1a bis 4d jeweils mit denselben Bezugszeichen versehen.

In der Fig. 1a ist in einer Seitenansicht eine Prinzipskizze eines aus dem Stand der Technik bekannten Klemmgreifers 1 dargestellt, welcher wenigstens zwei bewegliche Greifarme 1.1, 1.2 aufweist, die jeweils um einen Drehpunkt D1 bzw. D2 zumindest bereichsweise drehbar bzw. schwenkbar gelagert sind. Die Greifarme 1.1, 1.2 dienen dazu, das Faserhalbzeug 10, welches beispielsweise ein noch zu imprägnierendes oder auch ein bereits imprägniertes Faserhalbzeug 10 ist, zu greifen.

Wie insbesondere auch in der Fig. 1b gezeigt, welche in einer Seitenansicht den in der Fig. 1a gezeigten Klemmgreifer 1 in einer geschlossenen Position zeigt, bei welchem die Greifarme 1.1, 1.2 das Faserhalbzeug 10 zumindest am Rand einklemmen, kann jedoch die Position des Faserhalbzeuges 10 nicht präzise gehalten werden. Folglich ist ein Verrutschen des Faserhalbzeuges 10 zumindest während des Transportes des Faserhalbzeuges von beispielsweise einer ersten Bearbeitungsvorrichtung zu einer zweiten Bearbeitungsvorrichtung nicht ausgeschlossen. Des Weiteren sind auch ein präzises und insbesondere ein prozesssicheres Aufnehmen des Faserhalbzeuges aus einem Bearbeitungswerkzeug genauso wie ein einfaches und prozesssicheres Ablegen des Faserhalbzeuges 10 in einem Bearbeitungswerkzeug mittels der Verwendung eines Klemmgreifers, wie in den Fig. 1a und 1b gezeigt, insbesondere auf Grund der unflexibel beweglichen Greifarme 1.1 und 1.2 nachteilig nicht möglich.

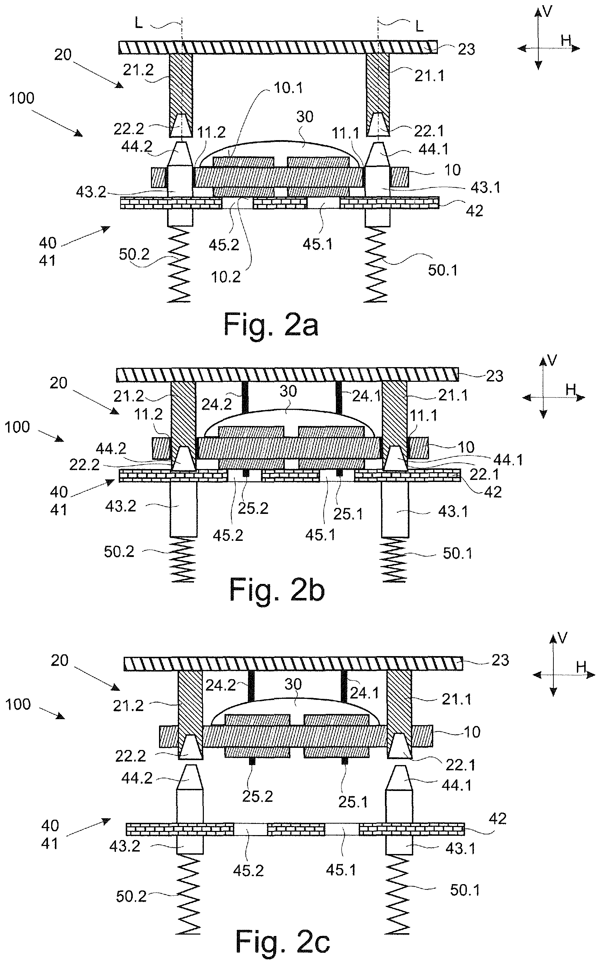

In den Fig. 2a bis 2c ist eine Ausführungsform einer erfindungsgemäßen Halbzeugherstellungsanlage 100 gezeigt, welche eine Transportvorrichtung 20 und eine Bearbeitungsvorrichtung 40 aufweist, wobei die Bearbeitungsvorrichtung 40 beispielsweise eine Imprägniervorrichtung 41 ist. Mittels der Imprägniervorrichtung 41 ist es möglich, ein Imprägniermittel 30, wie insbesondere ein Imprägnierharz, auf das Faserhalbzeug 10 und vorteilhaft auf eine Aufbringungsoberfläche 10.1 des Faserhalbzeuges 10 aufzubringen. Das Imprägniermittel 30 durchtränkt folglich des Faserhalbzeuges 10 und ummantelt die Fasern, um dieses zu imprägnieren. Die Bearbeitungsvorrichtung 40 bzw. Imprägniervorrichtung 41 weist zudem eine Aufnahmeplatte 42 auf, innerhalb welcher vorteilhaft durch die Dicke der Aufnahmeplatte 42 sich durchgängig erstreckende Schlitze 45.1 und 45.2 bzw. Durchlässe 45.1 und 45.2 eingebracht sind, durch welche überschüssiges Imprägniermittel 30 aus der Bearbeitungsvorrichtung 40 bzw. 41 abfließen kann. Des Weiteren weist die Bearbeitungsvorrichtung 40 bzw. 41 Anordnungselemente 43.1 und 43.2 auf, welche sich durch Eingriffsbereiche 11.1 und 11.2 des Faserhalbzeuges 10 hindurch erstrecken. Es wäre jedoch auch denkbar, dass die Anordnungselemente 43.1 und 43.2 der Bearbeitungsvorrichtung lediglich abschnittsweise in die Eingriffsbereiche 11.1 und 11.2 des Faserhalbzeuges 10 eingebracht sind. In den Fig. 2a bis 2c sind zwei Anordnungselemente 43.1 und 43.2 gezeigt, wobei die Bearbeitungsvorrichtung 40 bzw. 41 auch lediglich nur ein Anordnungselement 43.1 bzw. 43.2 oder auch mehr als zwei Anordnungselemente 43.1 und 43.2 aufweisen kann.

Die Ausführungsform der Transportvorrichtung 20, wie in den Fig. 2a bis 2c gezeigt, weist unter anderem ein Trägerelement 23 auf, welches sich beispielsweise vorteilhaft entlang einer horizontalen Richtung H bzw. in einer horizontalen Ebene H, vergleichbar zu der Aufnahmeplatte 42 der Bearbeitungsvorrichtung 40 bzw. 41 erstreckt. Ausgehend von dem Trägerelement 23 erstreckt sich in einer vertikalen Richtung V das Positioniermittel 21.1 bzw. 21.2 in Richtung der Bearbeitungsvorrichtung 40 bzw. 41. Die Positioniermittel 21.1 und 21.2 erstrecken sich folglich entlang einer Längsachse L des Positioniermittels. In den Fig. 2a bis 2c sind zwei Positioniermittel 21.1 und 21.2 gezeigt, wobei es jedoch auch denkbar ist, dass die Transportvorrichtung 20 lediglich ein Positioniermittel 21.1 oder 21.2 oder auch mehr als die zwei Positioniermittel 21.1 und 21.2 aufweist. In einem unteren Bereich weist das Positioniermittel 21.1 bzw. 21.2 eine Ausnehmung 22.1 bzw. 22.2 auf, welche vorteilhaft derart ausgestaltet ist, dass ein Einführbereich 44.1 bzw. 44.2 des Anordnungselementes 43.1 bzw. 43.2 in die Ausnehmung 22.1 bzw. 22.2 eingebracht werden kann. Wie insbesondere aus den Fig. 2a bis 2c ersichtlich ist, weist die Ausnehmung 22.1 bzw. 22.2 eine vergleichbare Gestalt zu dem Einführbereich 44.1 bzw. 44.2 auf, wobei beide vorteilhaft kegelstumpfförmig ausgestaltet sind. Das Faserhalbzeug 10 weist zudem eine Anordnungsoberfläche 10.2 auf, welche der Aufbringungsoberfläche 10.1 gegenüberliegend ist. Die Anordnungsoberfläche 10.2, welche auch als Kontaktierungsoberfläche 10.2 bezeichnet werden kann, kontaktiert zumindest abschnittsweise die Aufnahmeplatte 42 der Bearbeitungsvorrichtung 40 bzw. 41, wobei es auch Bereiche an der Anordnungsoberfläche 10.2 gibt, welche beabstandet zu der Aufnahmeplatte 42 ausgestaltet sind. In der Fig. 2a sind noch keine Haltemittel zum Halten des Faserhalbzeuges 10 ersichtlich, da diese sich vorteilhaft in einer eingefahrenen Position, beispielsweise in einem Bereich des Trägerelementes 23, befinden und vorteilhaft erst ausgeschwenkt bzw. ausgefahren werden, wenn das Positioniermittel 21.1 bzw. 21.2 in den Eingriffsbereich 11.1 bzw. 11.2 des Faserhalbzeuges 10 eingebracht ist. Dies ist insbesondere in der Fig. 2b gezeigt.

In der Fig. 2b ist folglich in einer Seitenansicht das Einbringen der Positioniermittel 21.2 und 21.1 in die Eingriffsbereiche 11.1 bzw. 11.2 des Faserhalbzeuges 10 gezeigt, wobei die Anordnungselemente 43.1 bzw. 43.2 mittels der Positioniermittel 21.1 und 21.2 aus den Eingriffsbereichen 11.1 und 11.2 verdrängt werden. Hierzu werden auch die bereits in der Fig. 2a gezeigten Federelemente 50.1 und 50.2 komprimiert bzw. gestaucht, so dass die Anordnungselemente 43.1 und 43.2 in vertikaler Richtung V nach unten aus den Eingriffsbereichen 11.1 und 11.2 des Faserhalbzeuges 10 herausbewegt werden. Dazu ist der Einführbereich 44.1 bzw. 44.2 in die entsprechende Ausnehmung 22.1 bzw. 22.2 des jeweiligen Positioniermittels 21.1 bzw. 21.2 eingebracht. Des Weiteren sind in der Fig. 2b Haltemittel 24.1 und 24.2 in einer ausgefahrenen Position gezeigt, wobei jedes Haltemittel 24.1 und 24.2 einen Haltebereich 25.1 und 25.2 aufweist, welcher beispielsweise im Bereich der Schlitze 54.1, 54.2 der Bearbeitungsvorrichtung 40 bzw. 41 die Anordnungsoberfläche 10.2 (vgl. Fig. 2a) des Faserhalbzeuges 10 derart kontaktiert bzw. sich entlang dieser Oberfläche 10.2 erstreckt, dass das Faserhalbzeug 10 folglich mittels der Haltemittel 24.1 bzw. 24.2 und insbesondere der Kontaktbereiche 25.1 und 25.2 kontaktiert wird. Das Faserhalbzeug 10 wird folglich mittels der Haltemittel 24.1 bzw. 24.2 und insbesondere deren Kontaktbereiche 25.1 und 25.2 untergriffen. Die Haltemittel 24.1 bzw. 24.2 sind insbesondere in Form von Greifarmen oder auch Gabeln, wie beispielsweise bei einem Gabelstapler bekannt, ausgebildet, um ein Untergreifen und folglich ein Anheben und Halten des Faserhalbzeuges 10 während des Transportes des Faserhalbzeuges 10 zu ermöglichen.

Insbesondere das Anheben des Faserhalbzeuges 10 und folglich das Aufnehmen des Faserhalbzeuges 10 mittels der Transportvorrichtung 20 wird beispielsweise in der Fig. 2c gezeigt. Hierbei wird die Transportvorrichtung 20 in vertikaler Richtung V nach oben bewegt, wobei mittels der Haltemittel 24.1 und 24.2 das mittels der Positioniermittel 21.1 und 21.2 positionierte Faserhalbzeug 10 ebenfalls in vertikaler Richtung V nach oben bewegt wird. Basierend auf der Entnahme des Faserhalbzeuges 10 von der Bearbeitungsvorrichtung 40 und insbesondere der Imprägniervorrichtung 41 und dem Heraufbewegen der Transportvorrichtung 20 in vertikaler Richtung V nach oben, wird auch die durch die Positioniermittel 21.1 und 21.2 auf die Anordnungselemente 43.1 und 43.2 aufgebrachte Druckkraft aufgehoben. Basierend auf der Federkraft der Federelemente 50.1 bzw. 50.2, welche die Anordnungselemente 43.1 und 43.2 mit einer Federkraft beaufschlagen, werden somit diese Anordnungselemente 43.1 und 43.2 wieder in vertikaler Richtung V nach oben bewegt.

In der Fig. 3a ist schematisch in einer Seitenansicht eine weitere Ausführungsform einer erfindungsgemäßen Halbzeugherstellungsanlage 100 gezeigt, welche, wie in den Fig. 2a bis 2d gezeigt, eine Transportvorrichtung 20 aufweist. Des Weiteren weist die erfindungsgemäße Halbzeugherstellungsanlage 100 eine Bearbeitungsvorrichtung 40 und insbesondere, wie in den Fig. 3a bis 3c gezeigt, eine Konsolidierungsvorrichtung 46 auf. Die Konsolidierungsvorrichtung 46, welche vorteilhaft zum Formen des Faserhalbzeuges und Vernetzen der Fasern des Faserhalbzeuges dient, weist beispielsweise eine Grundplatte 47 mit Ausformungen 48.1 und 48.2 auf, welche in Form eines Presswerkzeuges zur Gestaltung des Faserhalbzeuges 10 dienen. Des Weiteren weist die Konsolidierungsvorrichtung 46 Anordnungselemente 43.1 und 43.2 auf, welche verdrehsteif bzw. fest und starr an der Grundplatte 47 angeordnet sind und sich im Wesentlichen in vertikaler Richtung V nach oben von der Grundplatte 47 weg erstrecken. Die Anordnungselemente 43.1 und 43.2 sind im Wesentlichen mit den in den Fig. 2a bis 2c gezeigten Anordnungselementen 43.1 und 43.2 vergleichbar und weisen folglich auch einen Einführbereich 44.1 und 44.2 auf, welcher im Wesentlichen eine identische Gestalt zu der Ausnehmung 22.1 bzw. 22.2 der Positioniermittel 21.1 bzw. 21.2 der Transportvorrichtung 20 aufweisen.

Wie in der Fig. 3a gezeigt, wird das mit der Transportvorrichtung 20 positionierte und gehaltene bzw. transportierte Faserhalbzeug 10 in dem Bereich der Konsolidierungsvorrichtung 46 transportiert, wobei die Positioniermittel 21.1 und 21.2 derart in den Bereich der Anordnungselemente 43.1 und 43.2 bewegt werden, dass bei einem Herunterfahren bzw. bei einer Abwärtsbewegung der Transportvorrichtung 20 in vertikaler Richtung V nach unten die Einführbereiche 44.1 und 44.2 in die Ausnehmungen 22.1 und 22.2 eingebracht werden können, so dass eine präzise Übergabe des Faserhalbzeuges von der Transportvorrichtung 20 an die Konsolidierungsvorrichtung 46 und eine präzise Positionierung des Faserhalbzeuges 10 in der Konsolidierungsvorrichtung 46 ermöglicht wird.

Das Zusammenfahren der Transportvorrichtung 20 mit der Konsolidierungsvorrichtung 46 bzw. der Bearbeitungsvorrichtung 40 ist insbesondere in der Fig. 3b gezeigt. Hierbei zeigt sich deutlich, wie die Einführbereiche 44.1 bzw. 44.2 in die Ausnehmungen 22.1 bzw. 22.2 eingebracht werden. Basierend auf den starr angeordneten Anordnungselementen 43.1 und 43.2 ist ein vollständiges Absetzen des Faserhalbzeuges 10 auf die Grundplatte 47 der Konsolidierungsvorrichtung 46, wie in der Fig. 3b gezeigt, nicht möglich. Hierzu wäre es denkbar, dass die Haltemittel 24.1 und 24.2 derart in vertikaler Richtung V nach unten weiter ausgefahren werden, dass das Faserhalbzeug 10 lediglich über die Haltemittel 24.1 und 24.2 auf die Grundplatte 47 aufgesetzt wird.

In der Fig. 3c ist das Ablegen des Faserhalbzeuges 10 in der Konsolidierungsvorrichtung 46 gezeigt, wobei die Transportvorrichtung 20 wieder in vertikaler Richtung V nach oben bewegt wird, um aus dem Bereich der Konsolidierungsvorrichtung 46 herausbewegt werden zu können. Wie in der Fig. 3c gezeigt, durchdringen die Anordnungselemente 43.1 bzw. 43.2 die entsprechenden Eingriffsbereiche 11.1 bzw. 11.2 des Faserhalbzeuges 10, so dass das Faserhalbzeug 10 folglich präzise im Bereich der Konsolidierungsvorrichtung 46 angeordnet wird. Es ist jedoch auch möglich, dass die Anordnungselemente 43.1 bzw. 43.2 die Eingriffsbereiche 11.1 bzw. 11.2 nicht vollständig durchdringen, sondern lediglich abschnittsweise in diese Eingriffsbereiche 11.1 bzw. 11.2 eingreifen.

Es ist des Weiteren denkbar, dass die in den Fig. 2a bis 3c gezeigten Ausführungsformen einer erfindungsgemäßen Halbzeugherstellungsanlage 100 auch lediglich Bereiche einer Ausführungsform einer gemeinsamen erfindungsgemäßen Halbzeugherstellungsanlage 100 darstellen. Das bedeutet, dass es im Rahmen der Erfindung denkbar ist, dass die Halbzeugherstellungsanlage 100 neben einer ersten Bearbeitungsvorrichtung 40, welche insbesondere eine Imprägniervorrichtung 41 ist, auch wenigstens eine zweite Bearbeitungsvorrichtung 40, welche insbesondere eine Konsolidierungsvorrichtung 46 ist, sowie auch eine Transportvorrichtung 20, welche ein Faserhalbzeug zwischen der ersten und der wenigstens zweiten Bearbeitungsvorrichtung 40 transportiert, aufweist. Hierbei ist es denkbar, dass jede der Bearbeitungsvorrichtungen 40 der Herstellungsanlage 100 vergleichbar zu den in den Fig. 2a bis 3c gezeigten Ausführungsformen der Bearbeitungsvorrichtung 40 ausgestaltet sein können. Das bedeutet beispielsweise, dass die einzelnen Bearbeitungsvorrichtungen 40 federgelagerte Anordnungselemente 43.1, 43.2 oder auch starre Anordnungselemente 43.1, 43, Schlitze 45.1, 45.2 und/oder Ausformungen 48.1, 48.2 usw. aufweisen können. Vorteilhaft sind die einzelnen Bestandteile der Bearbeitungsvorrichtung 40 variabel miteinander kombinierbar, so dass die Bearbeitungsvorrichtung 40 auf keine definierte Ausgestaltung beschränkt ist.

In den Fig. 4a bis 4d sind ein Ausschnitt einer weiteren Ausführungsform einer Transportvorrichtung 20 und insbesondere ein Positioniermittel 21.1 der Transportvorrichtung 20 gezeigt. Das Positioniermittel 21.1 weist eine Aussparung 27 auf, innerhalb welcher ein bzw. zwei Haltemittel 26.1 bzw. 26.2 angeordnet ist bzw. sind. Die Haltemittel 26.1 und 26.2 sind jeweils drehbar um einen Drehpunkt D1 bzw. D2 gelagert. Wie auch bereits in den Fig. 3a bis 3c bzw. 2a bis 2c gezeigt, ist es denkbar, dass das Positioniermittel 21.1 an einem hier nicht gezeigten Trägerelement der Transportvorrichtung 20 angeordnet ist. Entgegen zu den zuvor gezeigten Ausführungsformen der Transportvorrichtung 20 ist jedoch das Haltemittel 26.1 bzw. 26.2 nicht eigenständig an dem Trägerelement, sondern an dem Positioniermittel 21.1 selbst angeordnet.

Während in den Fig. 4a und 4b das Positioniermittel 21.1 mit eingeklappten bzw. eingefahrenen Haltemitteln 26.1 und 26.2 im Bereich der Aussparung 27 gezeigt ist, wird in den Fig. 4c und 4d das Positioniermittel 21.1 mit ausgeschwenkten bzw. ausgefahrenen Haltemitteln 26.1 und 26.2 gezeigt. Hierbei sind die Haltemittel 26.1 und 26.2 um den Drehpunkt D1 bzw. D2, welcher auch als Drehachse bezeichnet werden kann, derart geschwenkt worden, dass dieser an einer Anordnungsoberfläche 10.2 des Faserhalbzeuges 10 angeordnet wird. Folglich erstrecken sich die Haltemittel 26.1 und 26.2 zumindest abschnittsweise entlang einer Anordnungsoberfläche 10.2 des Faserhalbzeuges 10.

Wie in den Fig. 4a bis 4d gezeigt, können die Haltemittel 26.1 und 26.2 gebogen und insbesondere in Form eines Halbkreises gebogen, als Haltearme ausgebildet sein. Es ist jedoch denkbar, dass die Haltemittel 26.1 und 26.2 jedwede Ausgestaltung und Form aufweisen können. Hierbei ist lediglich zu beachten, dass die Haltemittel 26.1 und 26.2 vorteilhaft derart in der Aussparung 27 des Positioniermittels 21.1 einbringbar sind, dass das Positioniermittel 21.1 derart vollständig durch den Eingriffsbereich 11.1 des Faserhalbzeuges hindurchgeführt werden kann, dass eine Hindurchführbewegung des Positioniermittels 21.1 durch den Eingriffsbereich 11.1 mittels der Haltemittel 26.1 bzw. 26.2 nicht verhindert oder erschwert wird.

Wie in der Fig. 4d gezeigt, wird das Positioniermittel 21.1 vorteilhaft derart weit durch den Eingriffsbereich 11.1 des Faserhalbzeuges 10 hindurchgeführt, dass bei einem Herausbewegen bzw. Herausschwenken des Haltemittels 26.1 bzw. 26.2 aus der Aussparung 27 des Positioniermittels 21.1 ein Untergreifen des Faserhalbzeuges 10 ermöglicht wird.

In den Fig. 4a bis 4d ist jeweils lediglich ein Positioniermittel 21.1 dargestellt, wobei die Ausführung der in den Fig. 4a bis 4d gezeigten Positioniermittel 21.1 auch für die weiteren in der Transportvorrichtung 20 angeordneten Positioniermittel anwendbar ist.

In der Fig. 5a ist in einer Draufsicht eine Schnittdarstellung einer weiteren Ausführungsform eines Positioniermittels 21.1 einer erfindungsgemäßen Transportvorrichtung 20 gezeigt. Das Positioniermittel 21.1 weist hierbei zwei Haltemittel 26.1 und 26.2 auf, welche jeweils in hier nicht gezeigten Aussparungen des Positioniermittels 21.1 angeordnet sind und vorteilhaft lediglich bei Bedarf herausgefahren bzw. herausgeklappt werden. Vorteilhaft sind die in der Fig. 5a gezeigten Haltemittel 26.1 und 26.2 in Form von Widerhaken ausgebildet, welche zumindest während der Bewegung des Positioniermittels 21.1 durch den Eingriffsbereich 11.1 des Faserhalbzeuges 10, wie insbesondere in der Fig. 5b gezeigt, vollständig in den Aussparungen 27.1 bzw. 27.2 angeordnet sind, so dass ein störungsfreies Hindurchbewegen des Positioniermittels 21.1 durch den Eingriffsbereich 11.1 gewährleistet werden kann.

Während in den Fig. 5a und 5b ein Positioniermittel 21.1 mit eingeklappten bzw. eingefahrenen Haltemitteln 26.1 und 26.2 gezeigt ist, wird in den Fig. 5c und 5d die in den Figuren 5a und 5b gezeigte weitere Ausführungsform eines Positioniermittels 21.1 mit ausgefahrenen Haltemitteln 26.1 und 26.2 gezeigt. Vorteilhaft werden die Haltemittel 26.1 und 26.2 derart weit aus den Aussparungen 27.1 bzw. 27.2 des Positioniermittels 21.1 herausbewegt und insbesondere heraus geklappt, sofern es sich um widerhakenähnliche Haltemittel handelt, dass diese an einem Bereich einer Anordnungsoberfläche 10.2 des Faserhalbzeuges 10 angeordnet werden können bzw. diese Anordnungsoberfläche 10.2 zumindest abschnittsweise kontaktieren. Vorteilhaft weisen die Halteelement 26.1, 26.2 selbst Auflagebereiche auf, welche sich zumindest derart weit entlang der Anordnungsoberfläche 10.2 des Faserhalbzeuges 10 erstrecken, dass ein Anheben des Faserhalbzeuges aus einer hier nicht gezeigten Bearbeitungsvorrichtung und auch ein Transportieren des Faserhalbzeuges 10 sowie ein Ablegen des Faserhalbzeuges 10 in eine hier nicht gezeigte Bearbeitungsvorrichtung in einfacher und kostengünstiger sowie prozessfreier Art ermöglicht werden kann, ohne dass das Faserhalbzeug 10 verrutscht, sich verbiegt oder sich anderweitig depositioniert.

In den Fig. 5a bis 5d ist jeweils lediglich ein Positioniermittel 21.1 dargestellt, wobei die Ausführung der in den Fig. 5a bis 5d gezeigten Positioniermittel 21.1 auch für die weiteren in der Transportvorrichtung 20 angeordneten Positioniermittel anwendbar ist.

### Bezugszeichenliste

- 1: Klemmgreifer (Stand der Technik)
- 1.1, 1.2: Greifarm des Klemmgreifers
- 10: Faserhalbzeug
- 10.1: Aufbringungsoberfläche
- 10.2: Anordnungsoberfläche
- 11.1, 11.2: Eingriffsbereich
- 20: Transportvorrichtung
- 21.1, 21.2: Positioniermittel
- 22.1, 22.2: Ausnehmung des Positioniermittels
- 23: Trägerelement
- 24.1, 24.2: Haltemittel
- 25.1, 25.2: Kontaktbereich
- 26.1, 26.2: Haltemittel
- 27, 27.1,27.2: Aussparung
- 30: Imprägniermittel
- 40: Bearbeitungsvorrichtung
- 41: Imprägniervorrichtung
- 42: Aufnahmeplatte
- 43.1, 43.2: Anordnungselement
- 44.1, 44.2: Einführbereich des Anordnungselementes
- 45.1, 54.2: Schlitze der Aufnahmeplatte
- 46: Konsolidierungsvorrichtung
- 47: Grundplatte
- 48.1, 48.2: Ausformung der Grundplatte
- 50.1, 50.2: Federelement
- 100: Halbzeugherstellungsanlage
- V: vertikale Richtung/vertikale Ebene
- H: horizontale Richtung/horizontale Ebene
- L: Längsachse des Positioniermittels

## Patentansprüche

1. Transportvorrichtung (20) zum Transportieren eines Faserhalbzeuges (10), wobei die Transportvorrichtung (20) ein Bestandteil einer Faserhalbzeugherstellungsanlage (100) ist und wenigstens ein Positioniermittel (21.1, 21.2) zum Positionieren des Faserhalbzeuges (10) relativ zu der Transportvorrichtung (20), wobei das Positioniermittel (21.1, 21.2) als ein Positionierstift oder ein Positionierpin ausgebildet ist, und wenigstens ein Haltemittel (24.1, 24.2, 26.1, 26.2) zum Halten des Faserhalbzeuges (10) während des Transportierens an der Transportvorrichtung (20) aufweist, und wobei das Positioniermittel (21.1, 21.2), zum Positionieren des Faserhalbzeuges (10), zumindest abschnittsweise in einen Eingriffsbereich (11.1, 11.2) des Faserhalbzeuges (10) einbringbar ist, wobei der Eingriffsbereich (11.1, 11.2) als eine Ausnehmung, eine Aussparung, eine Vertiefung oder eine Bohrung ausgebildet ist, und das Haltemittel (24.1, 24.2, 26.1, 26.2), zum Halten des Faserhalbzeuges (10), zumindest abschnittsweise an einer Oberfläche des Faserhalbzeuges (10) anordenbar ist.

2. Transportvorrichtung (20) gemäß Anspruch 1,
**dadurch gekennzeichnet, dass**
das Haltemittel (24.1, 24.2, 26.1, 26.2) beweglich relativ zu dem Positioniermittel (21.1, 21.2) ausgebildet ist.

3. Transportvorrichtung (20) gemäß wenigstens einem der vorangegangenen Ansprüche 1 oder 2,
**dadurch gekennzeichnet, dass**
das Haltemittel (24.1, 24.2, 26.1, 26.2) zumindest abschnittsweise in einer Aussparung (27) des Positioniermittels (21.1, 21.2) anordenbar ist.

4. Transportvorrichtung (20) gemäß wenigstens einem der vorangegangenen Ansprüche 1 oder 2,
**dadurch gekennzeichnet, dass**
das Haltemittel (24.1, 24.2, 26.1, 26.2) an einer unteren Oberfläche des Positioniermittels (21.1, 21.2) anordenbar ist.

5. Transportvorrichtung (20) gemäß wenigstens einem der vorangegangenen Ansprüche,
**dadurch gekennzeichnet, dass**
das Haltemittel (24.1, 24.2, 26.1, 26.2) an dem Positioniermittel (21.1, 21.2) zumindest abschnittsweise drehbar um einen Drehpunkt (D1, D2) angeordnet ist.

6. Transportvorrichtung (20) gemäß wenigstens einem der vorangegangenen Ansprüche 1 oder 2,
**dadurch gekennzeichnet, dass**
die Transportvorrichtung (20) ein relativ zu dem Faserhalbzeug (10) beweglich ausgestaltetes Trägerelement (23) aufweist, an welchem das Positioniermittel (21.1, 21.2) und/oder das Haltemittel (24.1, 24.2, 26.1, 26.2) angeordnet sind.

7. Transportvorrichtung (20) gemäß Anspruch 6,
**dadurch gekennzeichnet, dass**
das Haltemittel (24.1, 24.2, 26.1, 26.2) beweglich relativ zum Trägerelement (23) ausgestaltet ist.

8. Transportvorrichtung (20) gemäß wenigstens einem der vorangegangenen Ansprüche,
**dadurch gekennzeichnet, dass**
das Positioniermittel (21.1, 21.2) eine Ausnehmung (22.1, 22.2) zum zumindest abschnittsweisen Aufnehmen eines Anordnungselementes (43.1, 43,2) einer Bearbeitungsvorrichtung (40, 41, 46) aufweist.

9. Bearbeitungsvorrichtung (40, 41, 46) zum Bearbeiten eines Faserhalbzeuges (10), wobei die Bearbeitungsvorrichtung (40, 41, 46) ein Bestandteil einer Halbzeugherstellungsanlage (100) ist und wenigstens ein Anordnungselement (43.1, 43,2), wobei das Anordnungselement (43.1, 43.2) als ein Anordnungsstift oder ein Anordnungspin ausgebildet ist, zum Anordnen des Faserhalbzeuges (10) relativ zu der Bearbeitungsvorrichtung (40, 41, 46) aufweist, und wobei das Anordnungselement (43.1, 43,2) in einen Eingriffsbereich (11.1, 11.2) des Faserhalbzeuges (10) einbringbar ist, wobei der Eingriffsbereich (11.1, 11.2) als eine Ausnehmung, eine Aussparung, eine Vertiefung oder eine Bohrung ausgebildet ist.

10. Bearbeitungsvorrichtung (40, 41, 46) gemäß Anspruch 9,
**dadurch gekennzeichnet, dass**
das Anordnungselement (43.1, 43,2) mittels eines Federelementes (50.1, 50.2) beweglich relativ zu der Bearbeitungsvorrichtung (40, 41, 46) angeordnet ist.

11. Halbzeugherstellungsanlage (100) zum Herstellen eines Faserhalbzeuges (10), welche eine Transportvorrichtung (10) gemäß wenigstens einem der vorangegangenen Ansprüche 1 bis 8 und/oder eine Bearbeitungsvorrichtung (40, 41, 46) gemäß wenigstens einem der vorangegangenen Ansprüche 9 oder 10 aufweist.

12. Transportverfahren zum Aufnehmen, Transportieren und Ablegen eines Faserhalbzeuges (10) von und zu einer Bearbeitungsvorrichtung (40, 41, 46) mittels einer Transportvorrichtung (20), wobei zum Aufnehmen des Faserhalbzeuges (10) zumindest ein Positioniermittel (21.1, 21.2) der Transportvorrichtung (20) zum Positionieren des Faserhalbzeuges (10) relativ zu der Transporteinrichtung (20) in einen Eingriffsbereich (11.1, 11.2) des Faserhalbzeuges (10) eingebracht wird und zumindest ein Haltemittel (24.1, 24.2, 26.1, 26.2) der Transportvorrichtung (20) zum Halten des Faserhalbzeuges (10) an der Transportvorrichtung (20) zumindest abschnittsweise an einer Oberfläche des Faserhalbzeuges (10) angeordnet wird, wobei eine Transportvorrichtung (20) gemäß wenigstens einem der vorangegangenen Ansprüche 1 bis 8 zum Aufnehmen, Transportieren und Ablegen eines Faserhalbzeuges (10) und/oder eine Bearbeitungsvorrichtung (40, 41, 46) zum Bearbeiten des Faserhalbzeuges (10) gemäß wenigstens einem der vorangegangenen Ansprüche 9 oder 10 verwendet wird.

## Claims

1. Transport device (20) for transporting a fibre semifinished product (10), wherein the transport device (20) is a constituent part of a fibre-semifinished-product production installation (100) and has at least one positioning means (21.1, 21.2) for positioning the fibre semifinished product (10) relative to the transport device (20), wherein the positioning means (21.1, 21.2) is in the form of a positioning pin, and has at least one holding means (24.1, 24.2, 26.1, 26.2) for holding the fibre semifinished product (10) during transportation on the transport device (20), and wherein the positioning means (21.1, 21.2), for positioning the fibre semifinished product (10), is able to be introduced at least sectionally into an engagement region (11.1, 11.2) of the fibre semifinished product (10), wherein the engagement region (11.1, 11.2) is in the form of a recess, a cutout, a depression or a bore, and the holding means (24.1, 24.2, 26.1, 26.2), for holding the fibre semifinished product (10), is able to be arranged at least sectionally on a surface of the fibre semifinished product (10).

2. Transport device (20) according to Claim 1,
**characterized in that**
the holding means (24.1, 24.2, 26.1, 26.2) is configured so as to be movable relative to the positioning means (21.1, 21.2).

3. Transport device (20) according to at least either of preceding Claims 1 and 2,
**characterized in that**
the holding means (24.1, 24.2, 26.1, 26.2) is able to be arranged at least sectionally in a cutout (27) of the positioning means (21.1, 21.2).

4. Transport device (20) according to at least either of preceding Claims 1 and 2,
**characterized in that**
the holding means (24.1, 24.2, 26.1, 26.2) is able to be arranged on a lower surface of the positioning means (21.1, 21.2).

5. Transport device (20) according to at least one of the preceding claims,
**characterized in that**
the holding means (24.1, 24.2, 26.1, 26.2) is arranged on the positioning means (21.1, 21.2) at least sectionally rotatable about a point of rotation (D1, D2).

6. Transport device (20) according to at least either of preceding Claims 1 and 2,
**characterized in that**
the transport device (20) has a carrier element (23) which is configured to be movable relative to the fibre semifinished product (10) and on which the positioning means (21.1, 21.2) and/or the holding means (24.1, 24.2, 26.1, 26.2) are/is arranged.

7. Transport device (20) according to Claim 6,
**characterized in that**
the holding means (24.1, 24.2, 26.1, 26.2) is configured to be movable relative to the carrier element (23) .

8. Transport device (20) according to at least one of the preceding claims,
**characterized in that**
the positioning means (21.1, 21.2) has a recess (22.1, 22.2) for at least sectionally receiving an arrangement element (43.1, 43.2) of a processing device (40, 41, 46).

9. Processing device (40, 41, 46) for processing a fibre semifinished product (10), wherein the processing device (40, 41, 46) is a constituent part of a semifinished-product production installation (100) and has at least one arrangement element (43.1, 43.2), wherein the arrangement element (43.1, 43.2) is in the form of an arrangement pin, for arrangement of the semifinished product (10) relative to the processing device (40, 41, 46), and wherein the arrangement element (43.1, 43.2) is able to be introduced into an engagement region (11.1, 11.2) of the fibre semifinished product (10), wherein the engagement region (11.1, 11.2) is in the form of a recess, a cutout, a depression or a bore.

10. Processing device (40, 41, 46) according to Claim 9,
**characterized in that**
the arrangement element (43.1, 43.2) is arranged so as to be movable relative to the processing device (40, 41, 46) by means of a spring element (50.1, 50.2) .

11. Semifinished-product production installation (100) for producing a fibre semifinished product (10), having a transport device (10) according to at least one of preceding Claims 1 to 8 and/or a processing device (40, 41, 46) according to at least either of preceding Claims 9 and 10.

12. Transport method for performing picking-up, transporting and setting-down of a fibre semifinished product (10) from and to a processing device (40, 41, 46) by means of a transport device (20), wherein, for picking up the fibre semifinished product (10), at least one positioning means (21.1, 21.2) of the transport device (20) for positioning the fibre semifinished product (10) relative to the transport device (20) is introduced into an engagement region (11.1, 11.2) of the fibre semifinished product (10) and at least one holding means (24.1, 24.2, 26.1, 26.2) of the transport device (20) for holding the fibre semifinished product (10) on the transport device (20) is arranged at least sectionally on a surface of the fibre semifinished product (10), wherein use is made of a transport device (20) according to at least one of preceding Claims 1 to 8 for picking up, transporting and setting down a fibre semifinished product (10) and/or of a processing device (40, 41, 46) for processing the fibre semifinished product (10) according to at least either of preceding Claims 9 and 10.

## Revendications

1. Dispositif de transport (20) pour transporter un produit semi-fini de fibres (10), le dispositif de transport (20) étant un constituant d'une installation de fabrication de produits semi-finis de fibres (100) et présentant au moins un moyen de positionnement (21.1, 21.2) pour positionner le produit semi-fini de fibres (10) par rapport au dispositif de transport (20), le moyen de positionnement (21.1, 21.2) étant réalisé sous la forme d'une broche de positionnement ou d'une goupille de positionnement, et au moins un moyen de maintien (24.1, 24.2, 26.1, 26.2) pour maintenir le produit semi-fini de fibres (10) pendant le transport sur le dispositif de transport (20), et le moyen de positionnement (21.1, 21.2), pour positionner le produit semi-fini de fibres (10), pouvant être inséré au moins par sections dans une zone d'engagement (11.1, 11.2) du produit semi-fini de fibres (10), la zone d'engagement (11.1, 11.2) étant réalisée sous la forme d'un évidement, d'un creux, d'un renfoncement ou d'un alésage, et le moyen de maintien (24.1, 24.2, 26.1, 26.2), pour maintenir le produit semi-fini de fibres (10), pouvant être agencé au moins par sections sur une surface du produit semi-fini de fibres (10).

2. Dispositif de transport (20) selon la revendication 1,
**caractérisé en ce que**
le moyen de maintien (24.1, 24.2, 26.1, 26.2) est réalisé sous forme mobile par rapport au moyen de positionnement (21.1, 21.2).

3. Dispositif de transport (20) selon au moins l'une quelconque des revendications 1 ou 2 précédentes,
**caractérisé en ce que**
le moyen de maintien (24.1, 24.2, 26.1, 26.2) peut être agencé au moins par sections dans un creux (27) du moyen de positionnement (21.1, 21.2).

4. Dispositif de transport (20) selon au moins l'une quelconque des revendications 1 ou 2 précédentes,
**caractérisé en ce que**
le moyen de maintien (24.1, 24.2, 26.1, 26.2) peut être agencé sur une surface inférieure du moyen de positionnement (21.1, 21.2).

5. Dispositif de transport (20) selon au moins l'une quelconque des revendications précédentes,
**caractérisé en ce que**
le moyen de maintien (24.1, 24.2, 26.1, 26.2) est agencé sur le moyen de positionnement (21.1, 21.2) au moins par sections sous forme rotative autour d'un point de rotation (D1, D2).

6. Dispositif de transport (20) selon au moins l'une quelconque des revendications 1 ou 2 précédentes,
**caractérisé en ce que**
le dispositif de transport (20) présente un élément de support (23) conçu sous forme mobile par rapport au produit semi-fini de fibres (10), sur lequel sont agencés le moyen de positionnement (21.1, 21.2) et/ou le moyen de maintien (24.1, 24.2, 26.1, 26.2).

7. Dispositif de transport (20) selon la revendication 6,
**caractérisé en ce que**
le moyen de maintien (24.1, 24.2, 26.1, 26.2) est conçu sous forme mobile par rapport à l'élément de support (23) .

8. Dispositif de transport (20) selon au moins l'une quelconque des revendications précédentes,
**caractérisé en ce que**
le moyen de positionnement (21.1, 21.2) présente un évidement (22.1, 22.2) pour recevoir au moins par sections un élément d'agencement (43.1, 43.2) d'un dispositif de traitement (40, 41, 46).

9. Dispositif de traitement (40, 41, 46) pour traiter un produit semi-fini de fibres (10), le dispositif de traitement (40, 41, 46) étant un constituant d'une installation de fabrication de produits semi-finis (100) et présentant au moins un élément d'agencement (43.1, 43.2), l'élément d'agencement (43.1, 43.2) étant réalisé sous la forme d'une broche d'agencement ou d'une goupille d'agencement, pour agencer le produit semi-fini de fibres (10) par rapport au dispositif de traitement (40, 41, 46), et l'élément d'agencement (43.1, 43.2) pouvant être inséré dans une zone d'engagement (11.1, 11.2) du produit semi-fini de fibres (10), la zone d'engagement (11.1, 11.2) étant réalisée sous la forme d'un évidement, d'un creux, d'un renfoncement ou d'un alésage.

10. Dispositif de traitement (40, 41, 46) selon la revendication 9,
**caractérisé en ce que**
l'élément d'agencement (43.1, 43.2) est agencé sous forme mobile par rapport au dispositif de traitement (40, 41, 46) au moyen d'un élément à ressort (50.1, 50.2).

11. Installation de fabrication de produits semi-finis (100) pour fabriquer un produit semi-fini de fibres (10), qui présente un dispositif de transport (10) selon au moins l'une quelconque des revendications 1 à 8 précédentes et/ou un dispositif de traitement (40, 41, 46) selon au moins l'une quelconque des revendications 9 ou 10 précédentes.

12. Procédé de transport pour recevoir, transporter et déposer un produit semi-fini de fibres (10) depuis et vers un dispositif de traitement (40, 41, 46) au moyen d'un dispositif de transport (20), dans lequel, pour recevoir le produit semi-fini de fibres (10), au moins un moyen de positionnement (21.1, 21.2) du dispositif de transport (20) pour positionner le produit semi-fini de fibres (10) par rapport au dispositif de transport (20) est inséré dans une zone d'engagement (11.1, 11.2) du produit semi-fini de fibres (10) et au moins un moyen de maintien (24.1, 24.2, 26.1, 26.2) du dispositif de transport (20) pour maintenir le produit semi-fini de fibres (10) sur le dispositif de transport (20) est agencé au moins par sections sur une surface du produit semi-fini de fibres (10), un dispositif de transport (20) selon au moins l'une quelconque des revendications 1 à 8 précédentes pour recevoir, transporter et déposer un produit semi-fini de fibres (10) et/ou un dispositif de traitement (40, 41, 46) pour traiter le produit semi-fini de fibres (10) selon au moins l'une quelconque des revendications 9 ou 10 précédentes étant utilisés.
